# FASCICULE DE BREVET EUROPEEN

(11) **EP 3 992 798 B1**
(45) Date de publication et mention de la délivrance du brevet: **22.04.2026**
(21) Numéro de dépôt: 21204098.4
(22) Date de dépôt: 22.10.2021
(51) Int. Cl.: G06F 9/54, H04L 12/66, H04L 9/08, H04L 41/0226, H04L 69/08, H04L 69/24, H04W 12/40, H04L 9/40, H04L 9/00, H04L 12/40

(54) **ELÉMENT SÉCURISÉ ET PROCÉDÉ DE COMMUNICATION ENTRE UN ÉLÉMENT SÉCURISÉ ET L'EXTÉRIEUR DE L'ÉLÉMENT SÉCURISÉ**
GESICHERTES ELEMENT UND VERFAHREN ZUR KOMMUNKATION ZWISCHEN EINEM GESICHERTEN ELEMENT UND EINER DEM GESICHERTEN ELEMENT ÄUSSEREN UMGEBUNG
SECURE ELEMENT AND METHOD FOR COMMUNICATION BETWEEN A SECURE ELEMENT AND THE EXTERNAL ENVIRONMENT OF THE SECURE ELEMENT

(30) Priorité: 27.10.2020 FR 2010975
(43) Date de publication de la demande: 04.05.2022
(73) Titulaire: STMicroelectronics (Rousset) SAS, 13790 Rousset (FR); STMicroelectronics Belgium, 1831 Diegem (BE)
(72) Inventeur: VAN NIEUWENHUYZE, Olivier, 1970 WEZEMBEEK-OPPEM (BE); CHARLES, Alexandre, 13390 AURIOL (FR)
(74) Mandataire: Cabinet Beaumont

(56) Documents cités:
- FR-A1- 3 090 947
- US-A1- 2010 272 254
- US-A1- 2016 112 874
- US-A1- 2016 173 652
- US-A1- 2016 210 179
- US-A1- 2018 376 333
- US-A1- 2019 005 284
- US-A1- 2019 318 341

## Description

### Domaine technique

La présente description concerne de façon générale les dispositifs électroniques, et de façon plus particulière les dispositifs électroniques adaptés à traiter des données secrètes. Plus particulièrement, la présente description concerne la communication d'un élément sécurisé avec d'autres dispositifs électroniques.

### Technique antérieure

Il existe de plus en plus de dispositifs électroniques adaptés à fournir des services digitaux. Ces services digitaux utilisent des mécanismes cryptographiques où il est nécessaire de protéger les données secrètes qui ont une grande importance. L'intégrité du contenu est également très importante, en effet, à l'inverse d'une clé de chiffrement (ou de signature), un numéro d'identification ne doit pas pouvoir être modifié mais il est accessible librement. A cette fin, les dispositifs électroniques sont appelés à garantir la confidentialité et l'intégrité des données.

Un élément sécurisé est un dispositif électronique, autonome ou non, adapté à traiter des données secrètes de façon sécurisé, c'est-à-dire sans que ces données secrètes ne soient accessibles ou déduites, par exemple par des attaques par canaux cachés (side channel attack) ou de pénétration. Un élément sécurisé peut être configuré pour chiffrer des données par exemple.

Il serait souhaitable de pouvoir améliorer, au moins en partie, certains aspects de la communication entre un élément sécurisé et d'autres dispositifs électroniques.

Le document US 2018/376333 décrit un processus dans lequel, lorsque que le protocole d'une application exécutée par un dispositif n'est pas compatible avec celui d'un système distant, convertit la transaction pour permettre la communication. Ce document concerne la gestion d'une transaction entre une carte et un lecteur et ne concerne que les protocoles applicatifs, c'est-à-dire de haut niveau. Il n'intervient pas sur un changement de lien physique et pas sur le routage.

Le document FR 3 090 947 décrit un procédé de routage de bas niveau de transactions en fonction d'un identifiant d'unité d'exécution contenu dans une commande, avec conversion d'un protocole externe vers un protocole interne et inversement.

Le document US 2016/210179 décrit un pont de protocole de communication pour dispositifs carte de traitement.

Le document US 2010/272254 décrit un appareil NCF sécurisé et un procédé pour supporter différents modules de sécurité.

Le document US 2016/173652 décrit un dispositif pour supporter des communications entre plusieurs types de porteuses sécurisées et son procédé de communication.

Le document US 2019/318341 décrit un gestionnaire mobile intégré de service de confiance.

Le document US 2016/112874 décrit un procédé et un système d'exploitation d'un élément sécurisé.

Le document US 2019/005284 décrit une interface entre un contrôleur de communication en champ proche (NFC) et un élément sécurisé.

### Résumé de l'invention

Il existe un besoin pour des éléments sécurisés adaptés à communiquer efficacement avec d'autres dispositifs électroniques.

Un mode de réalisation pallie tout ou partie des inconvénients des éléments sécurisés connus.

L'invention est définie par les revendications annexées.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon schématique et sous forme de blocs, un exemple de dispositif électronique du type auquel s'appliquent les modes de réalisation décrits ;
la figure 2 représente, de façon schématique et sous forme de blocs, un autre exemple de dispositif électronique du type auquel s'appliquent les modes de réalisation décrits ;
la figure 3 représente, de façon schématique et sous forme de blocs, encore un autre exemple de dispositif électronique du type auquel s'appliquent les modes de réalisation décrits ;
la figure 4 représente, de façon schématique et sous forme de blocs, un mode de réalisation d'une architecture logicielle d'un élément sécurisé d'un dispositif électronique du type de ceux décrits en relation avec les figures 1 à 3 ; et
la figure 5 représente, de façon schématique et sous forme de blocs, un mode de réalisation d'une communication entre deux dispositifs électroniques ;
la figure 6 représente, de façon schématique et sous forme de blocs, un autre mode de réalisation d'une communication entre deux dispositifs électroniques.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Divers exemples de mise en œuvre et de réalisation sont exposés par la suite. Indépendamment de la dénomination donnée à ces exemples (modes de réalisation, exemples, variantes, etc.) et des qualificatifs employés (par exemple, de préférence, etc.), seules les parties de description qui sont incluses dans la portée des revendications font partie de la présente invention, les autres exemples n'étant exposés qu'à titre illustratif et n'étant utiles que pour mettre en évidence des aspects spécifiques à l'invention par rapport à ce qui n'en fait pas partie.

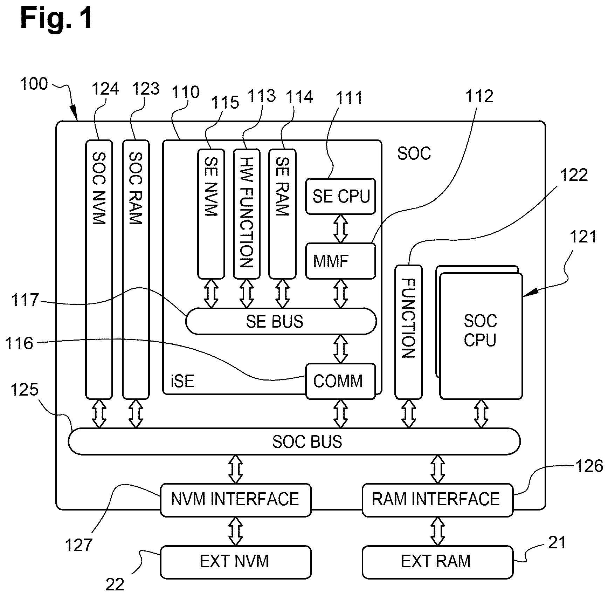

La figure 1 représente, de façon schématique et sous forme de blocs, un exemple de dispositif électronique 100 (SOC) du type auquel s'appliquent les modes de réalisation décrits.

Le dispositif 100 est un dispositif électronique formé sur une seule et même puce (System On Chip - SOC). Le dispositif 100 comprend un élément sécurisé 110 qui, dans cet exemple, est intégré (iSE - integrated Secure Element). L'élément sécurisé 110 est un élément sécurisé intégré dans le dispositif 100, c'est-à-dire qui peut avoir un fonctionnement autonome dans le dispositif 100. Selon une variante de réalisation, l'élément sécurisé 110 utilise certaines ressources matérielles du dispositif 100 pour fonctionner, comme des mémoires, des circuits mettant en oeuvre des fonctionnalités spécifiques, etc.

L'élément sécurisé intégré 110 est un circuit électronique manipulant des données secrètes qui sont, par exemple, chiffrées. L'élément sécurisé 110 comprend :
- au moins un processeur 111 (SE CPU) adapté à traiter des données secrètes ;
- une fonction de gestion de mémoire 112 (MMF) et/ou une unité de gestion de mémoire (MMU) (non représentée), adaptées à gérer la lecture et l'écriture de données dans les mémoires ;
- un ou plusieurs circuits 113 (HW FUNCTION) adaptés à mettre en oeuvre des fonctionnalités matérielles (par exemple un accélérateur cryptographique, une cellule de communication, etc.) de l'élément sécurisé 110 ;
- au moins une mémoire volatile 114 (SE RAM) ;
- au moins une mémoire non volatile 115 (SE NVM) ;
- un circuit de communication 116 (COMM) adapté à gérer les transmissions de données et de commandes entre l'élément sécurisé 110 et le reste du dispositif 100 ; et
- un bus de communication 117 (SE BUS) reliant tous les éléments de l'élément sécurisé 110.

En variante, l'élément sécurisé intégré 110 est connecté à un ou plusieurs bus additionnels de communication. Par exemple, l'élément sécurisé intégré peut avoir un bus selon la norme ISO7816, connecté avec un modem du système sur puce 100, un autre bus de type SWP (Single Wire Protocol - Protocole Unifilaire) connecté à un dispositif de communication en champ proche (NFC - Near Field Communication) .

Le processeur 111 est utilisé pour traiter des commandes et données provenant des mémoires 114 et 115, ou d'autres mémoires comprises dans le dispositif 100. Le processeur 111 utilise le circuit de gestion de mémoire 112 comme intermédiaire pour gérer le stockage en mémoire des données et des commandes, ainsi le processeur n'a jamais directement accès aux mémoires 114 et 115. A titre d'exemple, le circuit 112 peut, par exemple, servir à allouer des espaces mémoire d'une mémoire volatile ou d'une mémoire non volatile à certaines applications mises en oeuvre par l'élément sécurisé intégré.

Les circuits 113 peuvent comprendre une multitude de types de circuits et de composants, des fonctions permettant la copie des données vers des mémoires externes, des coprocesseurs cryptographiques, etc.

Le circuit de communication 116 peut servir de chaîne de réception et d'émission de données à l'élément sécurisé 110. Le circuit 116 peut comprendre des circuits de réception de données, des circuits de chiffrement et/ou de déchiffrement de données, un ou plusieurs routeurs, des circuits de conversion de données. Le dispositif 100 peut ne comprendre que l'élément sécurisé 110, mais peut aussi comprendre, en outre, de façon optionnelle :
- un ou plusieurs processeurs 121 (SOC CPU) adaptés à traiter des données ;
- un ou plusieurs circuits 122 (FUNCTION) adaptés à mettre en oeuvre différentes fonctionnalités du dispositif 100 ;
- une ou plusieurs mémoires volatiles 123 (SOC RAM) ;
- une ou plusieurs mémoires non volatiles 124 (SOC NVM) ; et
- un bus de communication 125 (SOC BUS) permettant d'échanger et de transmettre des commandes et des données à tous les éléments précédemment cités.

Pour des raisons d'encombrement et de compacité, le dispositif 100 peut, en outre, être adapté à stocker des données dans une ou plusieurs mémoires externes. Plus particulièrement, le dispositif 100 peut être adapté à stocker des données dans une mémoire volatile externe 21 (EXT RAM) et/ou dans une mémoire non volatile externe 22 (EXT NVM). Dans ce cas, le dispositif 100 comprend, en outre, des circuits d'interface adaptés à communiquer avec les mémoires externes. Plus particulièrement, le dispositif 100 peut comprendre, dans ce cas-là, un circuit d'interface 126 (RAM INTERFACE) adapté à communiquer avec la mémoire volatile externe 21, et/ou un circuit d'interface 127 (NVM INTERFACE) adapté à communiquer avec la mémoire non volatile 22.

L'élément sécurisé 110 peut avoir accès aux ressources matérielles du dispositif 100 pour fonctionner, comme par exemple aux circuits 122, aux mémoires 123, 124 ou même aux mémoires 21 et 22.

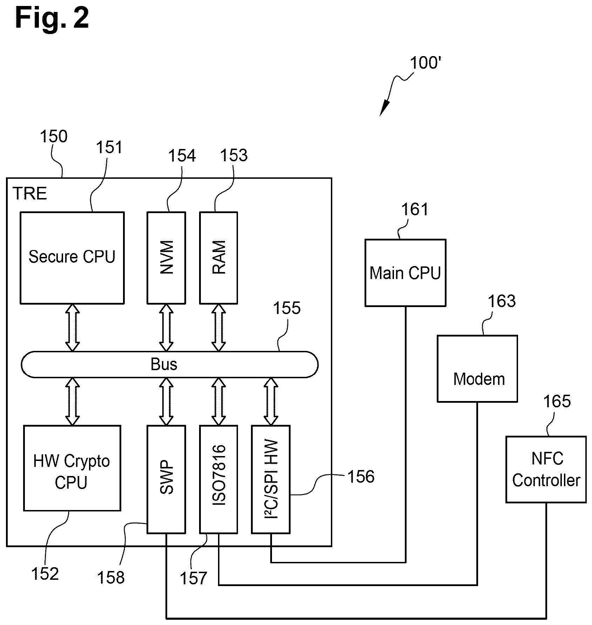

La figure 2 représente, de façon schématique et sous forme de blocs, un autre exemple de dispositif électronique 100' du type auquel s'appliquent les modes de réalisation décrits.

Le dispositif 100' comporte divers circuits ou puces électroniques parmi lesquels :
- un élément sécurisé embarqué (embedded Secure Element - eSE) 150 constituant un environnement sécurisé (TRE - Tampered Resistant Element) ;
- un processeur principal 161 (Main CPU) ;
- un circuit de communication 163 (Modem) de type modem ; et
- un circuit de communication en champ proche 165 (NFC controller) .

L'élément sécurisé embarqué 150 est constitué d'une seule puce et intègre, par exemple :
- un processeur sécurisé 151 (Secure CPU) ;
- un processeur cryptographique matériel 152 (HW Crypto CPU) ou accélérateur cryptographique ;
- une ou plusieurs mémoires volatiles 153 (RAM) ;
- une ou plusieurs mémoires non volatiles 154 (NVM) ;
   et
- un ou plusieurs bus 155 (Bus) de communication entre les différents constituants de l'élément 150.

L'élément 150 intègre en outre des interfaces de communication avec l'extérieur selon divers protocoles de communication, par exemple :
- une interface 156 (I2C/SPI HW) de type I2C ou SPI de communication avec le processeur externe 161 ;
- une interface 157 (ISO7816) de communication selon la norme ISO7816 avec le modem 163 ; et
- une interface 158 (SWP) de type SWP de communication avec le contrôleur NFC 165.

Le dispositif 100' peut comprendre d'autres circuits, intégrés ou non. Par exemple, l'élément sécurisé embarqué 150 peut utiliser une ou plusieurs mémoires externes (non représentées) avec lesquelles il communique directement ou via le processeur principal.

A la différence d'un élément sécurisé intégré tel que l'élément 110 de la figure 1, un élément sécurisé embarqué 150 n'est pas intégré avec les autres constituants du dispositif 100' et notamment le processeur principal de l'application.

L'élément sécurisé embarqué 150 peut cependant être intégré avec un contrôleur de communication en champ proche (NFC) .

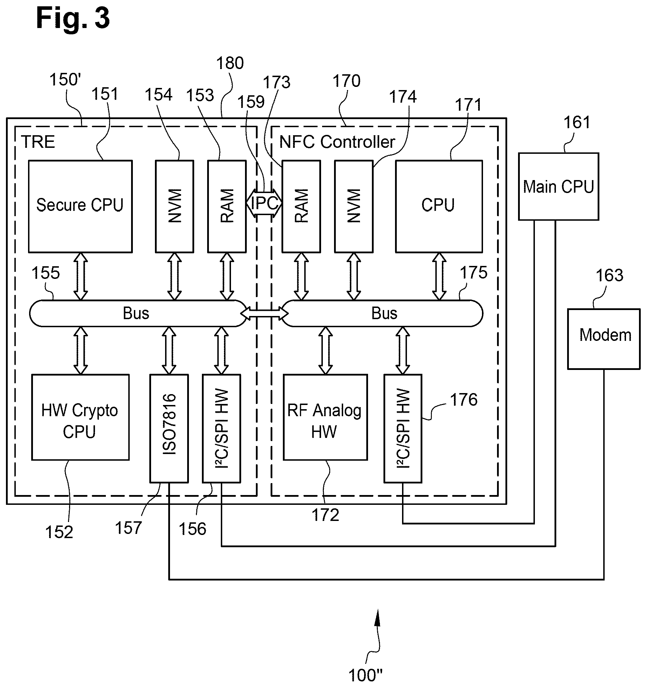

La figure 3 représente, de façon schématique et sous forme de blocs, encore un autre exemple de dispositif électronique 100" du type auquel s'appliquent les modes de réalisation décrits.

Dans cet exemple, on suppose que l'élément sécurisé embarqué est intégré avec un contrôleur de communication en champ proche sur une même puce 180. Ainsi, le circuit intégré ou puce 180 comporte :
- un élément sécurisé embarqué 150' (TRE) incluant les mêmes éléments que l'élément 150 de la figure 2 à l'exception de l'interface 158, à savoir :
   - un processeur sécurisé 151 (Secure CPU) ;
   - un processeur cryptographique matériel 152 (HW Crypto CPU) ;
   - une ou plusieurs mémoires volatiles 153 (RAM) ;
   - une ou plusieurs mémoires non volatiles 154 (NVM) ;
   - un ou plusieurs bus 155 (Bus) de communication entre les différents constituants de l'élément 150 ;
   - une interface 156 (I2C/SPI HW) de type I2C ou SPI de communication avec le processeur externe 161 (Main CPU) ; et
   - une interface 157 (ISO7816) de communication selon la norme ISO7816 avec le modem 163 (Modem) ; et
- un contrôleur NFC 170 (NFC Controller) incluant, par exemple :
   - un processeur 171 (CPU) ;
   - un circuit d'émission/réception radiofréquence 172 (RF Analog HW) ou tête analogique RF ;
   - une ou plusieurs mémoires volatiles 173 (RAM) ;
   - une ou plusieurs mémoires non volatiles 174 (NVM) ;
   - un ou plusieurs bus de communication 175 (Bus) entre les différents constituants du contrôleur NFC ; et
   - une interface 176 (I2C/SPI HW) de communication avec le processeur principal 161 du dispositif 100".

Les échanges entre l'élément sécurisé 150' et le contrôleur 170 transitent directement par les bus 155 et 175 qui, selon les cas, sont reliés entre eux ou constituent un seul et même bus, l'élément 150' et le contrôleur 170 pouvant le cas échéant simuler un protocole SWP.

L'élément sécurisé 150' et le contrôleur peuvent également communiquer par l'intermédiaire de leurs mémoires RAM 153 et 173 via une mémoire partagée 159 de communication entre processus (IPC - Inter Process Communication).

En variante, l'élément sécurisé 150' et le contrôleur peuvent communiquer via leurs cellules de communication SWP internes (non représentées). Cela permet de garder le format des échanges SWP (et des protocoles implémentés sur celui-ci) sans avoir les contraintes (telles que le bruit, la limitation de vitesse du bus, etc.).

L'application à des communications en champ proche entre un élément sécurisé (intégré ou embarqué) constitue une application préférée en raison du fort développement de ces fonctionnalités dans les dispositifs électroniques.

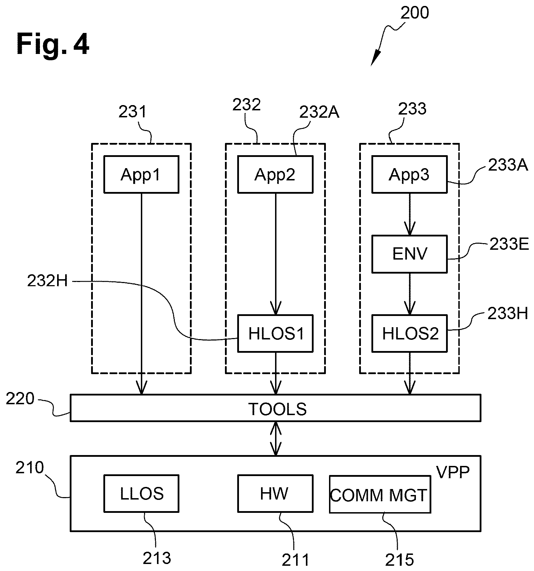

La figure 4 représente, de façon schématique et sous forme de blocs, un mode de réalisation d'une architecture logicielle 200 d'un élément sécurisé d'un dispositif électronique du type de ceux décrits en relation avec les figures 1 à 3.

Sauf précision contraire, l'expression "élément sécurisé" désigne par la suite indifféremment un élément sécurisé embarqué ou un élément sécurisé intégré. Ainsi, l'architecture logicielle 200 de l'élément sécurisé SE peut être mise en oeuvre dans l'un quelconque des éléments 110, 150 ou 150' des figures précédentes.

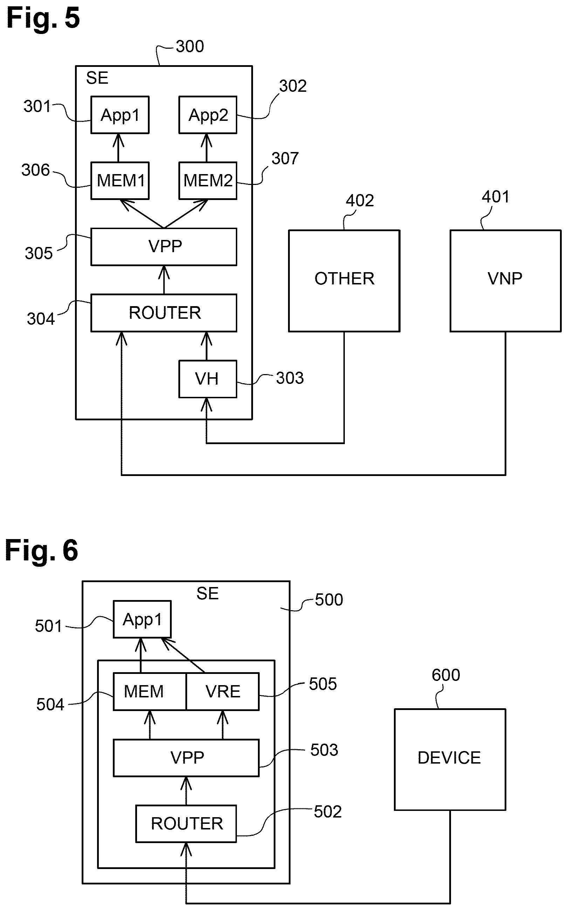

L'architecture 200 comprend une plateforme primaire 210 (VPP), généralement désignée par plateforme primaire virtuelle (Virtual Primary Platform, VPP), comprenant l'accès aux composants électroniques 211 (HW) de l'élément sécurisé SE, et comprenant un ou plusieurs systèmes d'exploitation de bas niveau 213 (LLOS, Low Level Operating System). Selon un mode de réalisation, la plateforme primaire 210 comprend, en outre, un circuit adapté à mettre en oeuvre un logiciel ou processus de gestion de communication 215 (COMM MGT) dont le fonctionnement est décrit en relation avec la figure 5.

Les composants 211 sont les ressources matérielles de l'élément sécurisé SE (110, figure 1 ; 150, figure 2 ; 150', figure 3). Les composants 211 de l'élément sécurisé 110 sont, par exemple, les un ou plusieurs processeurs, par exemple le processeur 111 (figure 1) ou 151 (figures 2 et 3), une ou plusieurs mémoires, par exemple les mémoires 114 et 115 (figure 1) ou 153 et 154 (figures 2 et 3), un ou plusieurs dispositifs de communication, comme un dispositif de communication permettant de communiquer directement avec un dispositif de communication en champ proche (NFC, Near Field Communication), un dispositif de communication à courte distance utilisant, par exemple, la norme Bluetooth, des capteurs biométriques, etc.

Les systèmes d'exploitation de bas niveau 213 sont des logiciels adaptés à mettre en oeuvre les composants 211 pour exécuter des commandes reçues de la part des applications mises en oeuvre par l'élément sécurisé. A titre d'exemple, les systèmes d'exploitation de bas niveau 213 comprennent tout ou partie des logiciels pilotes des composants 211.

Un système d'exploitation de bas niveau 213 est composé d'un code d'exécution (ou code exécutable) et de données d'exécution. Le code d'exécution contient des instructions permettant l'exécution des fonctions du programme. Par définition, les instructions sont invariables pour un programme donné, à l'exception d'une mise à jour du programme qui modifie alors les instructions. Les données d'exécution sont utilisées par le code d'exécution pour contextualiser l'exécution et réaliser la fonction souhaitée. Les données d'exécution peuvent être réparties en deux catégories. Les données d'exécution dites "temporaires" et les données d'exécution dites "permanentes" ou "fixes". Par exemple, si la fonction consiste en la vérification d'un code PIN, cette fonction est décomposée en trois parties, le code d'exécution contient des instructions de vérification du code PIN tandis que les données d'exécution permanentes contiennent le code PIN de référence et le nombre d'essais restants et que les données d'exécution temporaires contiennent le code PIN soumis à vérification.

La plateforme primaire 210 communique avec des applications mises en oeuvre par l'élément sécurisé 110 par des interfaces ou outils 220 (TOOLS) exécutés par la plateforme primaire. Ces interfaces ou outils 220 peuvent comprendre, entres autres :
- des interfaces binaire-programme (ABI, Application Binary Interface) ;
- des registres (VRE, Virtual Register) ; et
- des mémoires tampon de mémorisation, ou mémoires tampon, ou encore des mémoires partagées permettant l'échange de données entre processus via des communications inter-processus (IPC - Inter Process Communication).

Une interface binaire-programme est une interface de bas niveau entre les applications de l'élément sécurisé et son système d'exploitation, ou entre différentes parties d'une application.

Les registres sont des espaces mémoire liés à une fonction matérielle de l'élément sécurisé et utilisés pour stocker temporairement des données, par exemple lorsqu'une commande est envoyée à la plateforme primaire 210 de l'élément sécurisé ou lors d'échanges entre processus exécutés par la plateforme primaire.

Les mémoires tampon (ou mémoires partagées) sont utilisées pour stocker des messages avant leur utilisation par la plateforme 210 ou par des applications 231, 232, 233 de l'élément sécurisé. En pratique, les mémoires tampon sont des espaces mémoire alloués dans une mémoire de l'élément 110, par exemple une mémoire volatile à laquelle l'élément 110 a accès, comme la mémoire 114.

A titre d'exemple, l'architecture logicielle 200 comprend au moins trois applications 231, 232, 233 adaptées à utiliser les interfaces ou outils 220 pour mettre en oeuvre la plateforme primaire 210. Les applications 231, 232, 233 sont des logiciels utilisant les ressources de la plateforme primaire. Bien entendu, l'élément sécurisé met en oeuvre un nombre d'applications dans la limite de ses capacités de calcul.

Un élément sécurisé intégré 110 (figure 1) pourrait n'exécuter qu'une seule application à la fois dans ses mémoires internes et enregistrer les autres applications dans des mémoires externes, ce qui permettrait d'avoir un nombre d'applications limité uniquement par les mémoires externes. Il faut alors préalablement charger l'application dans les mémoires internes avant de l'exécuter (ou de reprendre l'exécution) et décharger l'application précédente avant de pouvoir l'utiliser. A l'inverse, un élément sécurisé embarqué 150 (figure 2) ou 150' (figure 3) privilégiera l'utilisation de ses mémoires internes pour stocker et exécuter les applications, ce qui implique une notion plus limitée d'applications mais une exécution plus rapide car on parlera d'une exécution "en place" (in place) qui ne requiert pas de déplacer l'application. Il reste toutefois possible de combiner un élément sécurisé embarqué avec des mémoires externes et donc de combiner le bénéfice des mémoires internes et externes. Les applications 231, 232, 233 peuvent être adaptées à mettre en oeuvre toutes sortes de fonctionnalités. Elles mettent généralement en œuvre des services digitaux d'un fournisseur de service, par exemple, un service de paiement de type EMV ou de ticket de transport. Ces applications peuvent être mises en combinaison avec une autre application se trouvant dans le processeur principal 121 (figure 1) ou 161 (figures 2 et 3) ou dans un autre environnement sécurisé (Trusted Execution Environment). Le processeur et l'environnement sécurisé sont plus à même d'interagir avec l'utilisateur via une interface utilisateur sécurisée (Trusted User Interface). Les applications 231, 232, 233 sont, par exemple, adaptées à traiter des commandes provenant d'interfaces de communication, comme, par exemple, une transaction bancaire utilisant un dispositif de communication en champ proche. Ces applications peuvent être de différents types, par exemple, une application SIM (Subscriber Identity Module), une application de paiement, une application permettant la validation d'un ticket de transport en commun, etc.

Selon un exemple de type d'application, l'application 231 (App1) est adaptée à être mise en oeuvre directement par la plateforme primaire 210 (VPP) avec l'aide des interfaces ou outils 220. L'application 231 est, par exemple, une application permettant d'effectuer des paiements en communiquant avec un dispositif de communication en champ proche (NFC, Near Field Communication).

Selon un autre exemple de type d'application, l'application 232 est un ensemble d'instructions 232A (App2) adaptée à être exécuté en utilisant un système d'exploitation de haut niveau 232H (HLOS1). Un système d'exploitation de haut-niveau est un logiciel adapté à mettre en oeuvre différentes applications en leur proposant un ensemble de fonctions logicielles communes. Le système d'exploitation 232H est la seule partie de l'application 232 à communiquer avec la plateforme primaire 210 avec l'aide des interfaces ou outils 220. A titre de variante, on peut également considérer que le système d'exploitation de haut niveau, ainsi que toutes les applications qui lui sont attachées, sont une seule application adaptée à être mise en oeuvre par la plateforme primaire 210 avec l'aide des interfaces ou outils 220.

Selon un autre exemple de type d'application, une autre application 233 est un ensemble d'instructions 233A (App3) utilisant un environnement d'exécution 233E (ENV) qui utilise lui-même un système d'exploitation de haut niveau 233H (HLOS2). L'environnement d'exécution est par exemple de type Java ou JavaCard. Le système d'exploitation 233H et l'environnement d'exécution 233E sont les seules parties de l'application 233 à communiquer avec la plateforme primaire 210 avec l'aide des interfaces ou outils 220. A titre de variante, on peut également considérer que le système d'exploitation de haut niveau, ainsi que toutes les applications qui lui sont attachées, sont une application adaptée à être mise en oeuvre par la plateforme primaire 210.

Les systèmes d'exploitation de haut niveau 232H et 233H, ou les applications 232 et 233 elles-mêmes s'il n'y a pas de système d'exploitation de haut niveau, utilisent des images virtuelles des mémoires disponibles pour la gestion des codes d'exécution et des données d'exécution. Grâce à cette technique, les systèmes d'exploitation de haut niveau (ou les applications) n'ont pas accès directement à la gestion des mémoires physiques qu'elles soient volatiles ou non volatiles. En d'autres termes, dans les modes de réalisation décrits, les systèmes d'exploitation de haut niveau gèrent une image virtuelle des mémoires. La correspondance de la répartition physique dans les mémoires volatile(s) et non volatile(s) est assurée par le ou les systèmes d'exploitation de bas niveau 213 en combinaison avec certains modules HW 211. De manière plus générale, on considère que le module 210 effectue la correspondance entre les mémoires virtuelles et physiques.

Par ailleurs, on considère qu'une application peut être dans au moins trois états différents :
- un état actif ou en cours d'exécution (running) par la plateforme primaire 110 ;
- un état de veille, c'est-à-dire que son exécution est interrompue mais qu'elle peut reprendre à tout moment ; et
- un état inactif ou désactivée, c'est-à-dire que son exécution ne peut être redémarrée sans une ou plusieurs opérations préalables.

Lorsqu'une application sort de veille pour être exécutée à nouveau, elle reprend son exécution là où elle s'est arrêtée. Elle n'a pas besoin d'utiliser de routine particulière pour continuer son traitement (processing). Du point de vue de l'application, tout apparaît comme si l'application n'a pas été interrompue.

Lorsqu'une application est désactivée, toutes ses données sont stockées en mémoire de la même façon que pour une application en veille.

La mise en oeuvre de l'application 231, 232, ou 233 est la suivante. Lorsqu'une application souhaite utiliser une ressource matérielle de l'élément sécurisé, c'est-à-dire un ou plusieurs composants 211 de la plateforme primaire 210, cela signifie que les opérations courantes exécutées sur les données fixes sont considérées comme terminées. L'application peut alors exécuter différentes commandes, par exemple, forcer une écriture vers une mémoire non volatile. Pour cela, l'application envoie une commande et/ou des données à la plateforme primaire 210 par l'intermédiaire des interfaces ou outils 220. La commande est prise en charge par une ou plusieurs interfaces binaire-programme avant d'être envoyée aux systèmes d'exploitation de bas niveau 213, c'est-à-dire que la commande est divisée en plusieurs opérations chacune représentée par une interface binaire-programme ou des registres virtuels ou encore une mémoire tampon / mémoire partagée. Les données sont, quant à elles, stockées dans des registres ou transmises via des communications entre processus (IPC). Les systèmes d'exploitation de bas niveau 213 répondent aux demandes des interfaces binaire-programme en appliquant les opérations demandées par les interfaces binaire-programme aux données stockées dans les registres. Les systèmes d'exploitation de bas niveau 213 pilotent ensuite les composants 211 pour exécuter ce que demande l'application.

Les applications 231, 232, 233 ne peuvent pas communiquer ensemble à l'intérieur de l'élément sécurisé. Chaque application 23x (x variant de 1 au nombre d'applications susceptibles d'être exécutées) ne connaît pas l'existence des autres applications 23x. En particulier, chaque système d'exploitation d'une application "croit" être le seul à communiquer avec l'extérieur. Ainsi, si les applications devaient communiquer entre elles, elles devraient le faire comme si elles discutaient d'un élément sécurisé exécutant une application 23x vers un autre élément avec une autre application 23x. Cependant, deux sous-applications d'un même ensemble ou application 233 (une application peut contenir plusieurs sous-applications) utilisent des procédés de communication par paquets pour communiquer entre elles en utilisant les outils IPC de communication entre processus. Chaque application 231, 232, 233 peut, quant à elle, communiquer avec des dispositifs électroniques extérieurs. La communication par paquets est une méthode de transmission de données dans laquelle des messages envoyés sont composés d'un ou plusieurs paquets de données. Chaque paquet de données comprend un en-tête (header) comprenant des informations relatives au type de protocole de communication utilisé, à l'émetteur du message, au récepteur du message, à la taille du message, etc. Parmi les différents protocoles de communication par paquets connus, l'élément sécurisé est susceptible d'utiliser (compatible avec) différents protocoles qui peuvent être classés, en fonction de la nature du protocole, en termes de protocole d'informations échangées, de protocole applicatif, de protocole de communication, de lien physique. Par exemple, ces protocoles incluent :
- le protocole VNP (Virtual Network Protocol) défini par la norme "Global Platform Technology Virtual Primary Platform - Network Protocol 1.0.1" (ou toute version ultérieure) qui correspond à un protocole des informations échangées ;
- le protocole SWP (Single Wire Protocol), défini par la norme ETSI TS 102 613 UICC - Contactless Front-end (CLF) Interface - Physical and data link layer characteristics, qui correspond à un lien physique ;
- le protocole de communication défini par la norme ISO7816 qui couvre à la fois l'échange d'informations, le protocole applicatif, les communications et la nature du lien physique (sans fil) ;
- le protocole HCI (Host Controller Interface), défini par la norme ETSI TS 102 612 v12.0 (ou toute version ultérieure) qui correspond à un protocole applicatif ;
- le protocole CLT, défini par la norme ETSI TS 102 613 (UICC - Contactless Front-end (CLF) Interface - Physical and data link layer characteristics 11.0 (ou toute version ultérieure) qui correspond à un protocole de communication ;
- le protocole sHDLC (Simplified High-Level Data Link Control), défini par la norme ETSI TS 102 613 (- UICC - Contactless Front-end (CLF) Interface - Physical and data link layer characteristics) ; et
- le protocole I2C ou SPI qui correspondent à des liens physiques.

Les messages peuvent aussi être transmis par l'intermédiaire d'une mémoire faisant office de bus de communication. Autrement dit, un bus de communication peut être remplacé par une mémoire dans laquelle sont écrites les données à transmettre par le dispositif émetteur, et lues par le dispositif récepteur.

Le protocole VNP est un protocole de communication adapté à fonctionner pour les communications d'un élément sécurisé. C'est un protocole adapté à gérer l'aiguillage des messages au sein de l'architecture 200 et également vers les dispositifs extérieurs. C'est le protocole de communication privilégié dans un élément sécurisé. Selon un mode de réalisation, le routeur compris dans les composants 211 (en combinaison avec les systèmes d'exploitation de bas niveau 213) est un routeur configuré pour traiter des messages utilisant le protocole VNP.

Les protocoles HCI, sHDLC et CLT sont des protocoles qui se trouvent en conflit avec le protocole VNP, ces protocoles n'étant pas compatibles, les normes ne définissent pas l'interaction entre les deux. Le résultat de ce conflit montre que les protocoles HCI, sHDLC et CLT ne sont pas adaptés à gérer l'aiguillage des messages au sein de l'architecture 200. Ainsi, le routeur compris dans les composants 211 ne peut pas prendre en charge un message utilisant les protocoles sHDLC, CLT et HCI car il n'y a pas les informations pour aiguiller correctement les messages au sein de l'architecture 200.

Les protocoles CLT, sHDLC et HCI, et le protocole défini par la norme ISO7816 sont des protocoles qui ne sont pas compatibles avec l'utilisation du protocole VNP. Le routeur compris dans les composants 211 (en combinaison avec 213) n'est pas apte à prendre en charge un message utilisant les protocoles CLT, sHDLC, HCI et ISO7816.

Dans les modes de réalisation décrits ci-après, on cherche à faire en sorte que l'élément sécurisé (intégré ou embarqué) gère les conflits éventuels entre les applications tout en isolant les applications les unes des autres. En d'autres termes, chaque système d'exploitation d'une application (ou chaque application sans système d'exploitation) croit être seul à accéder à l'élément sécurisé.

La figure 5 représente, de façon schématique et sous forme de blocs, un mode de réalisation d'une communication entre deux dispositifs électroniques.

La figure 5 illustre, par exemple, un mode de réalisation d'une communication entre un élément sécurisé 300 (SE) du type de ceux décrits en relation avec les figures précédentes et des dispositifs électroniques 401 (VNP) compatibles avec le protocole VNP, par exemple le processeur principal 121 (figure 1) ou 161 (figures 2 et 3) et un dispositif 402 (OTHER) qui n'est pas compatible avec le protocole VNP, et qui utilise des protocoles de communication par paquets différents. Il s'agit, par exemple, du modem 163 (figures 2 et 3) qui échange traditionnellement avec l'élément sécurisé (par exemple un module d'identification d'abonné - SIM, Subscriber Identification Module) via un protocole ISO7816. Le dispositif 401, 402 peut être le dispositif dans lequel est compris l'élément sécurisé 300 (cas du module de sécurité intégré) ou un dispositif électronique séparé (cas du module de sécurité embarqué).

Le dispositif 401 est adapté à communiquer avec l'élément sécurisé 300 en envoyant des messages utilisant le protocole VNP.

Le dispositif 402 est adapté à communiquer avec l'élément sécurisé 300 en envoyant des messages utilisant d'autres protocoles que le protocole VNP, comme par exemple le protocole HCI, le protocole SWP, le protocole CLT, le protocole ISO7816, le protocole sHDLC. Le dispositif 402 peut, par exemple, également utiliser une mémoire de temporisation interne comme lien physique véhiculant le protocole concerné. Le dispositif 402 est, par exemple, un dispositif de communication en champ proche, par exemple un dispositif NFC (Near Field Communication). Ce type de dispositif doit implémenter des normes spécifiques afin de permettre une interopérabilité (lors de son utilisation avec les différents dispositifs). Plus précisément, un dispositif NFC, utilisera un contrôleur NFC (Near Field Communication Controller - NFCC) ou une tête de communication sans contact (CLF - Contactless Front-End) avec le protocole NCI pour l'interfaçage entre le NFCC et le processeur principal et le protocole HCI/CLT/sHDLC pour l'interfaçage entre le NFCC ou le CLF et l'élément sécurisé.

Dans l'exemple illustré en relation avec la figure 3, l'élément sécurisé 300 met en oeuvre deux applications 301 (App1) et 302 (App2). La chaîne de réception d'un message par l'élément sécurisé 300 est représentée en figure 3. Cette chaîne de réception comprend :
- un circuit 303 (VH) adapté à mettre en oeuvre un logiciel d'hôte virtuel ;
- un routeur 304 (ROUTER) adapté à traiter les messages reçus ;
- la plateforme primaire virtuelle 305 (VPP) de l'élément sécurisé ; et
- deux mémoires tampon 306 (MEM1) et 307 (MEM2) associées chacune à une application 301, 302.

Lorsque le dispositif 401 envoie un message utilisant le protocole VNP à l'élément sécurisé 300, ce message est réceptionné par le routeur 304. Grâce à l'en-tête des paquets de données du message, le routeur 304 est capable de déterminer quelle application doit recevoir le message grâce aux informations présentes dans le protocole VNP. Le message passe, ensuite, par la plateforme privée virtuelle pour être stocké dans la mémoire tampon associée à l'application devant recevoir le message, le traiter et y répondre. L'application va chercher le message dans la mémoire tampon pour l'utiliser.

Lorsque le dispositif 402 envoie un message n'utilisant pas le protocole VNP à l'élément sécurisé 300, ce message est d'abord réceptionné par le circuit 303 adapté à mettre en oeuvre le logiciel ou processus d'hôte virtuel (Virtual Host). Ce logiciel ou processus a plusieurs fonctionnalités. Il permet, dans un premier temps, de modifier le protocole de communication utilisé par le message pour le rendre utilisable par le routeur 304 si ce protocole n'est pas compatible avec le protocole VNP. L'hôte virtuel permet, en outre, d'aiguiller le message vers l'application adéquate.

On suppose un exemple dans lequel un contrôleur NFC utilise le protocole HCI, combiné avec des protocoles sHDLC et CLT, comme cela est défini dans les normes ETSI TS 102 622 et TS 102 613. On suppose par ailleurs que les applications App1 et App2 de l'élément sécurisé 300 n'interfacent que la couche VPP (et le routeur). La couche VPP et le routeur associé n'utilisent alors que le protocole VNP. Dans un premier temps, le logiciel hôte virtuel va s'enregistrer, sur le routeur VNP, afin d'être vu par les applications App1 et App2 comme un hôte NFC implémentant un port (gate) HCI. Lorsque l'application App1 ou App2 va créer un canal (pipe) VNP vers ce logiciel hôte virtuel, le logiciel hôte virtuel va accepter la création du canal et initier la communication entre lui-même et le contrôleur NFC en utilisant les protocoles définis et compris par le contrôleur NFC. Ensuite, lorsque l'application App1 ou App2 va envoyer des commandes HCI afin d'exécuter des instructions sur le NFCC via des paquets VNP, le logiciel hôte virtuel va intercepter/recevoir les paquets VNP contenant la commande HCI et va enlever l'encapsulation VNP pour encapsuler le message dans une ou des trames sHDLC. Lors des messages venant, en retour, du contrôleur NFC vers l'application App1 ou App2, le logiciel hôte virtuel effectuera l'opération en sens inverse, c'est-à-dire en supprimant les informations sHDLC et en y ajoutant les informations VNP (tout en gardant le contenu HCI). Ce premier type d'implémentation rend l'utilisation de cette translation exclusive. En d'autres termes, deux applications de deux systèmes d'exploitation de bas niveau (LLOS) différents ne pourraient pas gérer correctement le contrôleur NFCC. En effet, ils arriveraient rapidement en conflit. Chaque système d'exploitation de bas niveau LLOS n'ayant pas la connaissance de l'autre système d'exploitation de bas niveau, leur application respective pourrait autrement introduire des paramètres incompatibles sur le contrôleur NFC, rendant les applications de l'autre application inutilisable. En outre, si un message sans contact arrivait par l'antenne du contrôleur NFC, il n'aurait pas de moyen d'identifier l'application devant effectuer le traitement de la commande. Par exemple, si un lien existe déjà entre l'application App1 et le contrôleur NFC, le logiciel hôte virtuel refuse alors la création d'un lien entre l'application App2 et le contrôleur NFC. Une fois le lien avec l'application App1 supprimé (par exemple, la tâche est terminée ou le canal (pipe) entre l'application 1 et le logiciel hôte virtuel est supprimé/fermé), le logiciel hôte virtuel autorise la création du lien entre l'application App2 et le contrôleur NFC. Par la suite, si l'application App1 souhaite accéder au contrôleur NFC, elle doit recréer le lien vers le contrôleur NFC une fois que le lien entre l'application App2 et le contrôleur NFC est terminé.

En variante, le logiciel hôte virtuel peut informer le contrôleur NFC de la présence de plusieurs systèmes d'exploitation de bas niveau LLOS (donc de plusieurs applications App1, App2), ce qui permet d'avoir plusieurs liens entre le contrôleur NFC et les applications. Selon cette variante, le logiciel hôte virtuel informe le contrôleur NFC qu'un nouveau système d'exploitation de bas niveau est disponible lors de la création du canal entre l'application de ce nouveau système d'exploitation et le logiciel hôte virtuel. Lors des échanges entre le contrôleur NFC et le logiciel hôte virtuel, les deux dispositifs ajoutent une information pour identifier l'application du système d'exploitation de bas niveau visée par la commande. Afin de faire la passerelle entre les deux protocoles (principalement quand il y a plusieurs applications), le logiciel hôte virtuel a une table de routage interne, permettant la translation des données. En variante, il utilise une fonction injective entre l'identifiant du contrôleur NFC et de l'application visée (deux identifiants distincts ne peuvent concerner une même application).

De façon optionnelle, le logiciel peut permettre, en outre, de modifier l'état d'une application, par exemple de la passer d'un état inactif, ou en veille, à un état actif afin qu'elle soit alerte pour la réception d'un message. Une fois le message traité par le logiciel hôte virtuel, il suit le même parcours qu'un message envoyé par le dispositif 401. Autrement dit, le routeur 304 reçoit le message et l'aiguille vers la bonne application. Le message passe, ensuite, par la plateforme privée virtuelle pour être stocké dans la mémoire tampon associée à l'application devant recevoir le message. L'application va chercher le message dans la mémoire tampon pour l'utiliser.

De façon optionnelle, le logiciel peut permettre de gérer une liste d'autorisations d'accès et d'échange de données entre les différentes applications, les différents environnements, et/ou les différents systèmes d'exploitation pour autoriser, ou non, des communications.

Un avantage de ce mode de réalisation est qu'il permet de rendre utilisable par l'élément sécurisé un message utilisant un protocole de communication autre que le protocole VNP.

La figure 6 représente, de façon schématique et sous forme de blocs, un autre mode de réalisation d'une communication entre deux dispositifs électroniques.

La figure 6 illustre, schématiquement et sous forme de blocs, un autre mode de réalisation d'un procédé de communication entre un élément sécurisé 500 (SE) du type de celui décrit en relation avec les figures précédentes, et un dispositif électronique 600 (DEVICE).

Le dispositif 600 utilise n'importe quel protocole de communication par paquets décrit en relation avec la figure 2 pour communiquer avec l'élément sécurisé. Le dispositif 600 peut être le dispositif dans lequel est compris l'élément sécurisé 500 ou un dispositif électronique extérieur. Le dispositif 600 est par exemple un dispositif de communication en champ proche.

Dans l'exemple illustré en relation avec la figure 4, l'élément sécurisé 500 met en oeuvre une application 501 (App1). La chaîne de réception d'un message par l'élément sécurisé 300 est représentée en figure 5. Cette chaîne de réception comprend :
- un routeur 502 (ROUTER) ;
   - la plateforme primaire virtuelle 503 (VPP) de l'élément sécurisé ;
- une mémoire tampon 504 (MEM) associée à l'application 501 ; et
- un registre 505 (VRE).

Le routeur 502 est adapté à utiliser le protocole VNP pour traiter et aiguiller les messages reçus vers l'application 501. Lorsque le dispositif 600 envoie un message utilisant le protocole VNP, le routeur 502 aiguille le message vers l'application 501. Pour cela le message passe par la plateforme primaire 503 puis est stocké dans la mémoire tampon 504. L'application 501 cherche ensuite le message dans la mémoire tampon 504 pour s'en servir.

Selon un mode de réalisation, le routeur 502 (en variante, la plateforme 503) est aussi adapté à diriger les messages qui n'utilisent pas le protocole VNP dans le registre 505 plutôt que vers la mémoire tampon 504. Le registre 505 est lié à l'application 501. Avant d'être utilisé, une opération de liaison du registre à l'application est réalisée. En effet, l'application App1 pourrait s'enregistrer sur un registre virtuel VRE (ou autre moyen) auprès de la plateforme primaire virtuelle 503 afin de lui indiquer qu'elle peut recevoir des commandes/instructions/information selon un protocole défini (sHDLC, CLT, etc.) et/ou d'une ligne physique (SWP, I2C, SPI, ISO7816, etc.). Dans cette implémentation, une seule application peut s'enregistrer sur le registre particulier. Lorsqu'une information arrive sur ce canal (logique ou physique), le routeur ou la plateforme VPP transmet l'information à l'application qui s'est enregistrée (sans altérer le protocole de communication utilisé).

Selon une variante de réalisation, l'élément 500 pourrait être adapté à mettre en oeuvre plus d'une application. Dans ce cas, chaque application est liée à un registre particulier par une opération de liaison.

Dans ce cas, la commande est envoyée à l'application "par défaut" ou à l'application actuellement active. Cela implique que l'application visée par la commande a été sélectionnée par un autre moyen (par exemple, par un canal qui a utilisé le protocole VNP). Dans le cas d'une sélection par un autre canal, l'application peut demander/imposer sa non-désélection pendant un certain temps (par exemple 500 ms, 1 sec, etc.) afin de pouvoir recevoir et traiter la commande suivante. Si le traitement complet de l'opération nécessite plusieurs commandes, l'application pourrait étendre le temps de non-désélection en le demandant à la couche VPP.

Selon une autre variante de réalisation où l'élément 500 est adapté à mettre en oeuvre plus d'une application, un registre peut être lié à l'application qui est en cours d'exécution par l'élément sécurisé 110.

Dans cette variante, les applications indiquent un motif ou "pattern" qui leur est propre. L'avantage est que si plusieurs applications s'enregistrent sur un même registre virtuel, le routeur 304 ou la plateforme 305 peuvent sélectionner l'application en fonction du motif enregistré. Une application par défaut peut continuer à exécuter son traitement si la commande reçue ne correspond à aucun motif (ou "pattern"). Bien entendu, les commandes suivant la sélection de l'application restent envoyées et traitées par celle-ci.

Un avantage de ce mode de réalisation est qu'il permet de rendre utilisable un message utilisant un protocole de communication autre que le protocole VNP.

Selon encore un autre mode de réalisation, le dispositif hôte externe à l'élément sécurisé, que cet hôte soit virtuel (virtual host) ou matériel (device host), met en oeuvre un (premier) protocole de communication vers lequel des messages selon un autre (deuxième) protocole sont convertis si l'élément sécurisé n'est pas compatible avec ce deuxième protocole.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

## Revendications

1. Elément sécurisé (110 ; 150 ; 150' ; 300) comprenant :
- un routeur (304) gérant des premiers messages utilisant un premier protocole de communication entre des applications de l'élément sécurisé et l'extérieur de l'élément sécurisé ; et
- une couche logicielle (303) effectuant un traitement impliquant un changement de lien physique entre l'élément sécurisé et l'extérieur de l'élément sécurisé ainsi que l'adaptation du protocole de routage de paquets au niveau du routeur et adaptée à :
- vérifier la compatibilité, avec le premier protocole, d'un deuxième protocole de communication, différent du premier, avec lequel sont reçus des deuxièmes messages, cette vérification étant effectuée sur la base d'informations relatives au type de protocole de communication utilisé comprises dans des en-têtes des messages ;
- en l'absence de compatibilité, convertir les deuxièmes messages dans le premier protocole de communication en enlevant l'encapsulation VNP pour encapsuler le message dans une ou des trames sHDLC ; et
- transmettre les deuxièmes messages audit routeur (304).

2. Procédé de communication entre un élément sécurisé (110 ; 150 ; 150' ; 300) et l'extérieur de l'élément sécurisé, l'élément sécurisé comprenant un routeur (304) gérant des premiers messages utilisant un premier protocole de communication entre des applications de l'élément sécurisé (110 ; 150 ; 150' ; 300) et l'extérieur, le procédé comportant des étapes, exécutées par une couche logicielle et impliquant un changement de lien physique entre l'élément sécurisé et l'extérieur de l'élément sécurisé ainsi que l'adaptation du protocole de routage de paquets au niveau du routeur, de :
- vérification de la compatibilité, avec le premier protocole, d'un deuxième protocole de communication, différent du premier, avec lequel sont reçus des deuxièmes messages, cette vérification étant effectuée sur la base d'informations relatives au type de protocole de communication utilisé comprises dans des en-têtes des messages ;
- en l'absence de compatibilité, conversion des deuxièmes messages dans le premier protocole de communication en enlevant l'encapsulation VNP pour encapsuler le message dans une ou des trames sHDLC ; et
- transmission des deuxièmes messages audit routeur (304).

3. Elément selon la revendication 1, ou procédé selon la revendication 2, dans lequel la couche logicielle est un hôte virtuel de destination pour les applications (301, 302).

4. Elément selon la revendication 1 ou 3, ou procédé selon la revendication 2 ou 3, dans lequel le premier protocole est mis en oeuvre par un dispositif externe à l'élément sécurisé.

5. Elément selon la revendication 1, 3 ou 4, ou procédé selon l'une quelconque des revendications 2 à 4, dans lequel le premier protocole est le protocole VNP défini selon la norme Global Platform Technology - Virtual Primary Platform - Network Protocol 1.0.1 ou ultérieur.

6. Elément selon l'une quelconque des revendications 1, 3 à 5, ou procédé selon l'une quelconque des revendications 2 à 5, dans lequel le deuxième protocole est choisi parmi le groupe comprenant le protocole HCI, le protocole SWP, le protocole CLT, le protocole de communication par paquets défini par la norme ISO7816, le protocole sHDLC et un protocole de communication utilisant une mémoire de temporisation interne.

7. Elément selon l'une quelconque des revendications 1, 3 à 6, ou procédé selon l'une quelconque des revendications 2 à 6, dans lequel lesdits premiers et deuxièmes messages sont composés de paquets de données d'un procédé de communication par paquets.

8. Elément ou procédé selon la revendication 7, dans lequel ladite couche logicielle est adaptée à modifier des en-têtes des paquets de données desdits deuxièmes messages.

9. Elément selon l'une quelconque des revendications 1, 3 à 8, ou procédé selon l'une quelconque des revendications 2 à 8, dans lequel lesdits deuxièmes messages proviennent d'un dispositif de communication en champ proche.

10. Elément selon l'une quelconque des revendications 1, 3 à 9, ou procédé selon l'une quelconque des revendications 2 à 9, dans lequel lesdits premiers et deuxièmes messages sont destinés à des applications adaptées à être mises en oeuvre par un système d'exploitation de haut niveau de l'élément sécurisé.

11. Elément ou procédé selon la revendication 10, dans lequel l'élément (110 ; 150 ; 150' ; 300) est adapté à mettre en oeuvre au moins deux applications.

12. Elément ou procédé selon la revendication 11, dans lequel ladite couche logicielle est, en outre, adaptée à aiguiller lesdits deuxièmes messages vers l'application parmi lesdites au moins deux applications à laquelle sont destinés lesdits deuxièmes messages.

13. Elément ou procédé selon la revendication 12, dans lequel ladite couche logicielle possède une table de routage permettant la conversion d'un message à destination d'une application donnée.

14. Elément ou procédé selon la revendication 12, dans lequel ladite couche logiciel informe un dispositif (402) distinct de l'élément sécurisé de la présence d'une application additionnelle lors de la création d'un canal vers cette même couche logicielle.

15. Elément selon l'une quelconque des revendications 1, 3 à 14, ou procédé selon l'une quelconque des revendications 2 à 14, dans lequel l'élément sécurisé est embarqué dans un système électronique.

16. Elément selon l'une quelconque des revendications 1, 3 à 14, ou procédé selon l'une quelconque des revendications 2 à 14, dans lequel l'élément sécurisé est intégré dans un système électronique.

## Patentansprüche

1. Sicheres Element (110; 150; 150'; 300), das Folgendes aufweist:
einen Router (304), der erste Nachrichten unter Verwendung eines ersten Kommunikationsprotokolls zwischen Anwendungen des sicheren Elements und der Außenseite des sicheren Elements verwaltet; und
eine Softwareschicht (303), die eine Verarbeitung durchführt, welche eine Änderung in der physischen Verbindung zwischen dem sicheren Element und der Außenseite des sicheren Elements sowie die Anpassung des Paketroutingprotokolls auf Ebene des Routers umfasst, und die eingerichtet ist zum:
Überprüfen der Kompatibilität, mit dem ersten Protokoll, eines zweiten Kommunikationsprotokolls, das sich von dem ersten unterscheidet und mit dem zweite Nachrichten empfangen werden, wobei diese Überprüfung auf der Basis von Informationen bezüglich des verwendeten Kommunikationsprotokolltyps durchgeführt wird, die in Headern der Nachrichten enthalten sind;
bei Fehlen von Kompatibilität, Umwandeln der zweiten Nachrichten in das erste Kommunikationsprotokoll durch Entfernen der VNP-Kapselung, um die Nachricht in einem oder mehreren sHDLC-Frames zu kapseln; und
Übertragen der zweiten Nachrichten an den Router (304).

2. Verfahren zur Kommunikation zwischen einem sicheren Element (110; 150; 150'; 300) und der Außenseite des sicheren Elements, wobei das sichere Element einen Router (304) aufweist, der erste Nachrichten unter Verwendung eines ersten Kommunikationsprotokolls zwischen Anwendungen des sicheren Elements (110; 150; 150'; 300) und der Außenseite verwaltet, wobei das Verfahren Schritte aufweist, die durch eine Softwareschicht ausgeführt werden und eine Änderung in der physischen Verbindung zwischen dem sicheren Element und der Außenseite des sicheren Elements sowie die Anpassung des Paketroutingprotokolls auf Ebene des Routers umfassen, wobei die Schritte Folgendes aufweisen:
Überprüfen der Kompatibilität, mit dem ersten Protokoll, eines zweiten Kommunikationsprotokolls, das sich von dem ersten unterscheidet und mit dem zweite Nachrichten empfangen werden, wobei diese Überprüfung auf der Basis von Informationen bezüglich des verwendeten Kommunikationsprotokolltyps durchgeführt wird, die in Headern der Nachrichten enthalten sind;
bei Fehlen von Kompatibilität, Umwandeln der zweiten Nachrichten in das erste Kommunikationsprotokoll durch Entfernen der VNP-Kapselung, um die Nachricht in einem oder mehreren sHDLC-Frames zu kapseln; und
Übertragen der zweiten Nachrichten an den Router (304).

3. Element nach Anspruch 1 oder Verfahren nach Anspruch 2, wobei die Softwareschicht ein virtueller Zielhost für die Anwendungen (301, 302) ist.

4. Element nach Anspruch 1 oder 3 oder Verfahren nach Anspruch 2 oder 3, wobei das erste Protokoll durch eine Vorrichtung umgesetzt wird, die sich außerhalb des sicheren Elements befindet.

5. Element nach Anspruch 1, 3 oder 4 oder Verfahren nach Anspruch 2 bis 4, wobei das erste Protokoll das VNP-Protokoll ist, das nach der Norm Global Platform Technology - Virtual Primary Platform - Network Protocol 1.0.1 oder einer nachfolgenden Norm definiert ist.

6. Element nach Anspruch 1, 3 bis 5 oder Verfahren nach einem der Ansprüche 2 bis 5, wobei das zweite Protokoll aus der Gruppe ausgewählt wird, die das HCI-Protokoll, das SWP-Protokoll, das CLT-Protokoll, das durch die Norm ISO7816 definierte Paketkommunikationsprotokoll, das sHDLC-Protokoll und ein Kommunikationsprotokoll, das einen internen Zeitgebungsspeicher verwendet, aufweist.

7. Element nach einem der Ansprüche 1, 3 bis 6 oder Verfahren nach einem der Ansprüche 2 bis 6, wobei die ersten und zweiten Nachrichten aus Datenpaketen eines Paketkommunikationsverfahrens gebildet werden.

8. Element oder Verfahren nach Anspruch 7, wobei die Softwareschicht eingerichtet ist zum Ändern von Headern der Datenpakete der zweiten Nachrichten.

9. Element nach einem der Ansprüche 1, 3 bis 8 oder Verfahren nach einem der Ansprüche 2 bis 8, wobei die zweiten Nachrichten von einer Nahfeldkommunikationsvorrichtung stammen.

10. Element nach einem der Ansprüche 1, 3 bis 9 oder Verfahren nach einem der Ansprüche 2 bis 9, wobei die ersten und zweiten Nachrichten für Anwendungen bestimmt sind, die eingerichtet sind, um durch ein High-Level-Betriebssystem des sicheren Elements umgesetzt zu werden.

11. Element oder Verfahren nach Anspruch 10, wobei das Element (110; 150; 150'; 300) eingerichtet ist zum Umsetzen von wenigstens zwei Anwendungen.

12. Element oder Verfahren nach Anspruch 11, wobei die Softwareschicht weiterhin eingerichtet ist zum Weiterleiten der zweiten Nachrichten an die Anwendung unter den wenigstens zwei Anwendungen, für die die zweiten Nachrichten bestimmt sind.

13. Element oder Verfahren nach Anspruch 12, wobei die Softwareschicht eine Routing-Tabelle aufweist, die eine Umwandlung einer Nachricht ermöglicht, die für eine gegebene Anwendung bestimmt ist.

14. Element oder Verfahren nach Anspruch 12, wobei die Softwareschicht eine Vorrichtung (402), die sich von dem sicheren Element unterscheidet, von dem Vorhandensein einer zusätzlichen Anwendung bei Erzeugung eines Kanals zu dieser selben Softwareschicht informiert.

15. Element nach Anspruch 1, 3 bis 14 oder Verfahren nach einem der Ansprüche 2 bis 14, wobei das sichere Element in ein elektronisches System eingebettet ist.

16. Element nach einem der Ansprüche 1, 3 bis 14 oder Verfahren nach einem der Ansprüche 2 bis 14, wobei das sichere Element in ein elektronisches System integriert ist.

## Claims

1. Secure element (110; 150; 150'; 300) comprising:
- a router (304) managing first messages using a first communication protocol between applications of the secure element and the outside of the secure element; and
- a software layer (303) performing a processing involving a change in physical link between the secure element and the outside of the secure element as well as the adaptation of the packet routing protocol at the router and adapted to:
- verifying the compatibility, with the first protocol, of a second communication protocol, different from the first one, with which second messages are received, this verification being performed based on information relative to the type of communication protocol used comprised in headers of the messages;
- in the absence of compatibility, converting the second messages into the first communication protocol by removing the VNP encapsulation to encapsulate the message in one or more sHDLC frames; and
- transmitting the second messages to said router (304).

2. Method of communication between a secure element (110; 150; 150'; 300) and the outside of the secure element, the secure element comprising a router (304) managing first messages using a first communication protocol between applications of the secure element (110; 150; 150'; 300) and the outside, the method comprising steps, executed by a software layer and involving a change in physical link between the secure element and the outside of the secure element as well as the adaptation of the packet routing protocol at the router, of:
- verification of the compatibility, with the first protocol, of a second communication protocol, different from the first one, with which second messages are received this verification being performed based on information relative to the type of communication protocol used comprised in headers of the messages;
- in the absence of compatibility, conversion of the second messages into the first communication protocol by removing the VNP encapsulation to encapsulate the message in one or more sHDLC frames; and
- transmission of the second messages to said router (304).

3. Element according to claim 1, or method according to claim 2, wherein the software layer is a virtual destination host for the applications (301, 302).

4. Element according to claim 1 or 3, or method according to claim 2 or 3, wherein the first protocol is implemented by a device external to the secure element.

5. Element according to claim 1, 3, or 4, or method according to claim 2 or 4, wherein the first protocol is the VNP protocol defined according to the Global Platform Technology - Virtual Primary Platform - Network Protocol 1.0.1 or subsequent standard.

6. Element according to claim 1, 3 to 5, or method according to any of claims 2 to 5, wherein the second protocol is selected from the group comprising the HCI protocol, the SWP protocol, the CLT protocol, the packet communication protocol defined by the ISO7816 standard, the sHDLC protocol, and a communication protocol using an internal timing memory.

7. Element according to any of claims 1, 3 to 6, or method according to any of claims 2 to 6, wherein said first and second messages are formed of data packets of a packet communication method.

8. Element or method according to claim 7, wherein said software layer is adapted to changing headers of the data packets of said second messages.

9. Element according to any of claims 1, 3 to 8 or method according to any of claims 2 to 8, wherein said second messages originate from a near-field communication device.

10. Element according to any of claims 1, 3 to 9 or method according to any of claims 2 to 9, wherein said first and second messages are intended for applications adapted to being implemented by a high-level operating system of the secure element.

11. Element or method according to claim 10, wherein the element (110; 150; 150'; 300) is adapted to implementing at least two applications.

12. Element or method according to claim 11, wherein said software layer is further adapted to directing said second messages to the application among said at least two applications for which said second messages are intended.

13. Element or method according to claim 12, wherein said software layer has a routing table allowing conversion of a message intended for a given application.

14. Element or method according to claim 12, wherein said software layer informs a device (402) distinct from the secure element of the presence of an additional application on creation of a channel to this same software layer.

15. Element or method according to claim 1, 3 to 14, or method according to any of claims 2 to 14, wherein the secure element is embedded in an electronic system.

16. Element according to any of claims 1, 3 to 14, or method according to any of claims 2 to 14, wherein the secure element is incorporated in an electronic system.
